(19) Europäisches Patentamt / European Patent Office / Office européen des brevets

(11) **EP 2 920 605 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(51) Int Cl.:
***G01S 7/35*** *(2006.01)*          ***G01S 13/58*** *(2006.01)*
***G01S 13/34*** *(2006.01)*

(21) Anmeldenummer: **13766963.6**

(22) Anmeldetag: **25.09.2013**

(86) Internationale Anmeldenummer:
**PCT/EP2013/069912**

(87) Internationale Veröffentlichungsnummer:
**WO 2014/075838 (22.05.2014 Gazette 2014/21)**

(54) **RAPID-CHIRPS-FMCW-RADAR**

RAPID-CHIRPS-FMCW-RADAR

RADAR FMCW À CHIRP RAPIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012   DE 102012220879**

(43) Veröffentlichungstag der Anmeldung:
**23.09.2015   Patentblatt 2015/39**

(73) Patentinhaber: **Robert Bosch GmbH**
**70442 Stuttgart (DE)**

(72) Erfinder:
  • **SCHROEDER, Christoph**
    **71063 Sindelfingen (DE)**
  • **SCHOOR, Michael**
    **70195 Stuttgart (DE)**

(56) Entgegenhaltungen:
**EP-A2- 1 918 736**          **WO-A2-02/31529**
**WO-A2-03/048802**          **DE-A1-102009 000 468**
**DE-A1-102009 047 931**

• **M O Monod ET AL: "Intertwined Linear Frequency Modulated Radar and Simulator for Outdoor Robotics Applications", , 6 July 2009 (2009-07-06), XP055386130, Retrieved from the Internet: URL:http://static.cemagref.fr/impala/publication/publications-du-projet/accueil-publications-du-projet/files/radar2009_final_submission_monod.pdf/attachment_download/attachedFile [retrieved on 2017-06-28]**

EP 2 920 605 B1

**Beschreibung**

Die Erfindung betrifft ein Verfahren zur Bestimmung von Abständen und Relativgeschwindigkeiten mehrerer gleichzeitig georteter Objekte mit einem FMCW-Radar, bei dem die Frequenz eines Sendesignals in der Form von sich periodisch wiederholenden Rampen moduliert wird, das Sendesignal mit einem empfangenen Signal zu einem Zwischenfrequenzsignal gemischt wird, und zur Bestimmung des Abstands und/oder der Relativgeschwindigkeit der Objekte die Änderung der Phase des Zwischenfrequenzsignals von Rampe zu Rampe ausgewertet wird, wobei das Modulationsmuster mindestens zwei Rampen umfasst, die sich nur um einen festen Frequenzversatz unterscheiden und in einem bestimmten zeitlichen Abstand aufeinanderfolgen, und anhand der Phasendifferenz der Zwischenfrequenzsignale für diese beiden Rampen ein eindeutiger Näherungswert für den Objektabstand berechnet wird.

Weiterhin betrifft die Erfindung einen Radarsensor, insbesondere für Kraftfahrzeuge, der zur Durchführung dieses Verfahrens ausgebildet ist.

Bei Kraftfahrzeugen werden FMCW-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Die Frequenz des Zwischenfrequenzsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objekts bedingt ist. Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands /Geschwindigkeits-Diagramm (R-v-Diagramm) als Gerade darstellen.

Um eindeutige Werte für den Abstand und die Relativgeschwindigkeit zu erhalten, wird bei einem gebräuchlichen Typ eines FMCW-Radars mit einander abwechselnden steigenden und fallenden Frequenzrampen gearbeitet. Im R-v-Diagramm erhält man dann für jede Rampe eine andere Gerade, und der Abstand und die Relativgeschwindigkeit des Objekts sind durch den Schnittpunkt dieser beiden Geraden gegeben.

Wenn jedoch mehrere Objekte gleichzeitig geortet werden, enthält das Frequenzspektrum des Zwischenfrequenzsignals auf jeder Rampe mehrere Peaks, je einen für jedes Objekt, und bei einem Vergleich der Peaks auf verschiedenen Rampen ist nicht mehr eindeutig feststellbar, welcher Peak zu welchem Objekt gehört. Beispielsweise erhält man bei gleichzeitiger Ortung von zwei Objekten ein R-v-Diagramm mit vier einander schneidenden Geraden. Nur zwei der vier Schnittpunkte geben die Abstände und Relativgeschwindigkeiten der beiden Objekte an, während die beiden anderen Schnittpunkte sogenannte "Scheinziele" repräsentieren.

Um diese Mehrdeutigkeit zu beseitigen, wird zumeist noch mit mindestens einer dritten Frequenzrampe gearbeitet, die eine andere Steigung hat und eine weitere Schar von Geraden im R-v-Diagramm liefert. Die echten Objekte sind dann daran zu erkennen, dass alle drei Geraden durch denselben Punkt gehen.

Bei zunehmender Anzahl von gleichzeitig georteten Objekten steigt jedoch die Wahrscheinlichkeit, dass drei Geraden sich zufällig in nahezu demselben Punkt schneiden, stark an, wodurch auch der der Aufwand steigt, die Mehrdeutigkeiten aufzulösen. Oft werden weitere Frequenzrampen verwendet, um Mehrdeutigkeiten einfacher aufzulösen.

Das im einleitenden Absatz beschriebene Verfahren ist aus DE 10 2009 000 468 A1 bekannt und stellt einen alternativen Ansatz zur Lösung dieses Problems dar. Hier wird mit einer Folge von identischen, verhältnismäßig kurzen Frequenzrampen, sogenannten "Rapid Chirps" gearbeitet, die im Verhältnis zu ihrer Dauer einen hohen Frequenzhub haben und deshalb so steil sind, dass im Zwischenfrequenzsignal der abstandsabhängige Anteil dominiert, während der Doppleranteil nur eine kleine Korrektur darstellt. Diese Korrektur wird dadurch bestimmt, dass man die Phasenänderung des Zwischenfrequenzsignals von Rampe zu Rampe verfolgt. Dabei wird der Umstand ausgenutzt, dass die Phase des Zwischenfrequenzsignals relativ empfindlich auf die geringe Änderung des Objektsabstands reagiert, die aus der Relativbewegung des Objektes während des kurzen Zeitintervalls von einer Frequenzrampe zur nächsten resultiert.

Da die Phasenänderung jedoch eine periodische Funktion der Relativgeschwindigkeit ist, lässt sich die Relativgeschwindigkeit nur dann eindeutig bestimmen, wenn sie so klein ist, dass die Phasenänderung weniger als eine halbe Periode (also weniger als p) beträgt.

Bei einem Einsatz des FMCW-Radars in einem Kraftfahrzeug können die Relativgeschwindigkeiten jedoch so groß sein, dass diese Bedingung verletzt wird. Um dennoch eindeutige Ergebnisse zu erhalten, müsste man die Dauer und damit die Wiederholfrequenz der Chirps weiter verkürzen. Das würde jedoch nicht nur mehr Rechenleistung erfordern, sondern wegen der entsprechend kürzeren "Beobachtungsdauer" auch eine größere Unschärfe bei der Abstandsmessung mit sich bringen, und schließlich wäre eine Messung überhaupt nicht mehr möglich, wenn die Rampendauer kürzer ist als die Zeit, die das Radarsignal für den Weg zum Objekt und zurück benötigt.

WO 03/048802 A2 beschreibt ein Verfahren, bei dem mit frequenzversetzten Rampen gearbeitet wird, um Fading-Effekte zu unterdrücken.

EP 1 918 736 A2, DE 10 2009 047 931 A1 und WO 02/31529 beschreiben Verfahren, bei denen alle Rampen des Modulationsmusters gegen einander frequenzversetzt sind.

In M O Monod ET AL: "Intertwined Linear Frequency Modulated Radar and Simulator for Outdoor Robotics Applications" 6. Juli 2009 (2009-07-06), XP055386130, wird ein Verfahren beschrieben, bei dem das Modulationsmuster zwei Scharen von untereinander identischen Rampen umfasst, die so ineinander verschachtelt sind, dass jeweils eine Rampe ohne Frequenzversatz und eine Rampe mit Frequenzversatz einander abwechseln, die Zwischenfrequenzsignale für die beiden Scharen getrennt ausgewertet werden, um die Phasendifferenz und damit den Objektabstand zu bestimmen.

Aufgabe der Erfindung ist es, ein Verfahren anzugeben, das es erlaubt, die Abstände und Relativgeschwindigkeiten eindeutig und mit hoher Genauigkeit zu messen.

Diese Aufgabe wird erfindungsgemäß dadurch gelöst, dass bei einem Verfahren der eingangs genannten Art das Modulationsmuster zwei Scharen von untereinander identischen Rampen umfasst, die so ineinander verschachtelt sind, dass jeweils eine Rampe ohne Frequenzversatz und eine Rampe mit Frequenzversatz einander abwechseln, die Zwischenfrequenzsignale für die beiden Scharen getrennt ausgewertet werden, um die Phasendifferenz zu bestimmen, und durch Auswertung der Zwischenfrequenzsignale mehrerer aufeinanderfolgender identischer Rampen eine Mehrzahl von in Frage kommenden Objektabständen berechnet wird und als endgültiger Objektabstand derjenige dieser berechneten Abstände ausgewählt wird, der dem Näherungswert am nächsten kommt.

Die Erfindung nutzt den Umstand aus, dass die Phasendifferenz der Zwischenfrequenzsignale für die beiden frequenzversetzten Rampen bei kurzem zeitlichen Abstand der beiden Rampen nahezu unabhängig von der Relativgeschwindigkeit des Objekts ist und deshalb einen guten Näherungswert für den Objektabstand liefert. Ein genauerer Wert für den Objektabstand kann dann gemäß einem der bekannten Verfahren bestimmt werden, die mehrdeutige Ergebnisse liefern. Der anhand der Phasendifferenz bestimmte Näherungswert erlaubt es dann, unter den mehreren in Frage kommenden genauen Werten für den Objektabstand den richtigen auszuwählen.

Vorteilhafte Ausgestaltungen der Erfindung sind in den Unteransprüchen angegeben.

Im folgenden wird ein Ausführungsbeispiel anhand der Zeichnung näher erläutert.

Es zeigen:

Fig. 1    ein Blockdiagramm eines FMCW-Radarsystems;

Fig. 2    ein Beispiel eines Frequenzmodulationsschemas;

Fig. 3    eine Folge von Zwischenfrequenz-Zeitsignalen sowie deren Fouriertransformierte;

Fig. 4    einen Längsschnitt der Zeitsignale nach Fig. 3 sowie die Fouriertransformierte dieses Längsschnittes;

Fig. 5    ein Diagramm zur Illustration des Ergebnisses einer zweidimensionalen Fouriertransformation;

Fig. 6    einen Längsschnitt analog zu Fig. 4 für eine andere Relativgeschwindigkeit; und

Fig. 7    ein Diagramm zur Erläuterung des erfindungsgemäßen Verfahrens.

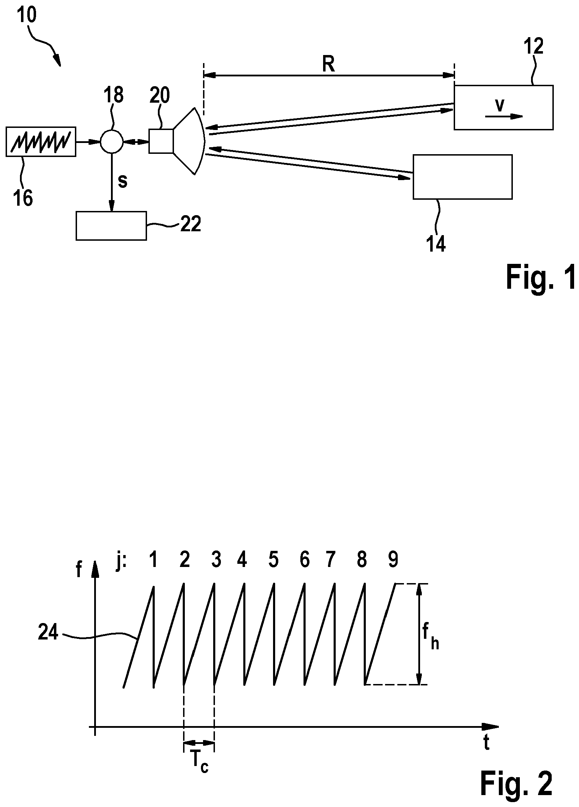

In Fig. 1 ist als vereinfachtes Blockdiagramm ein FMCW-Radarsensor 10 dargestellt, der beispielsweise vorn in einem Kraftfahrzeug eingebaut ist und dazu dient, Abstände R und Relativgeschwindigkeiten v von Objekten 12, 14 zu messen, beispielsweise von vorausfahrenden Fahrzeugen. Der Radarsensor 10 weist einen spannungsgesteuerten Oszillator 16 auf, der ein frequenzmoduliertes Sendesignal über einen Mischer 18 an eine Sende- und Empfangseinrichtung 20 liefert, von der das Signal in Richtung auf die Objekte 12, 14 ausgesandt wird. Das an den Objekten reflektierte Signal wird von der Sende- und Empfangseinrichtung 20 empfangen und im Mischer 18 mit einem Anteil des Sendesignals gemischt. Auf diese Weise erhält man ein Zwischenfrequenzsignal s, das in einer elektronischen Auswerte- und Steuereinrichtung 22 weiter ausgewertet wird.

Fig. 2 zeigt ein Beispiel für ein Modulationsschema des vom Oszillator 16 gelieferten Sendesignals. Die Frequenz f des Sendesignals ist hier als Funktion der Zeit t aufgetragen. Die Frequenz wird in der Form von aufeinanderfolgenden identischen Rampen 24 moduliert. Die Rampen 24 sind in Fig. 2 fortlaufend mit einem Index j numeriert. Die mittlere Frequenz des Sendesignals liegt in der Größenordnung von 76 GHz, und der Frequenzhub $f_h$, um den sich die Frequenz im Verlauf jeder Rampe ändert, liegt in der Größenordnung von einigen MHz. Der zeitliche Abstand $T_C$, in dem die Rampen 24 aufeinanderfolgen, liegt in der Größenordnung von einigen Mikrosekunden bis hin zu wenigen Millisekunden. Da im gezeigten Beispiel die Rampen 24 ohne Pause aufeinanderfolgen, gibt $T_C$ zugleich die Rampendauer an.

Die Frequenz des Zwischenfrequenzsignals s entspricht dem Frequenzunterschied zwischen dem Sendesignal, das vom Mischer 18 an die Sende- und Empfangseinrichtung 20 weitergeleitet wird, und dem Signal, das nach Reflexion an den Objekten 12, 14 von der Sende- und Empfangseinrichtung 20 empfangen wurde und wieder am Mischer 18 eintrifft. Dieser Frequenzunterschied setzt sich additiv zusammen aus einem abstandsabhängigen Anteil $f_R$ und einem geschwindigkeitsabhängigen Anteil $f_v$. Der abstandsabhängige Anteil $f_R$ resultiert aus der Frequenzmodulation und ist in dem hier gezeigten Beispiel gegeben durch:

$$f_R = 2\,R\,f_h\,/\,c\,T_C \tag{1}$$

wobei c die Lichtgeschwindigkeit ist. Der geschwindigkeitsabhängige Anteil resultiert aus dem Dopplereffekt und ist näherungsweise gegeben durch:

$$f_D = 2\,f\,v\,/\,c. \tag{2}$$

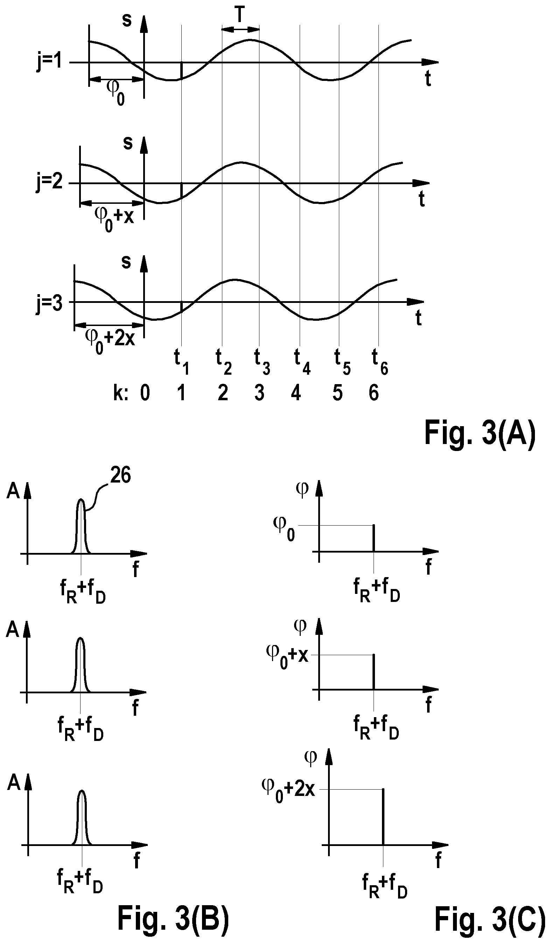

In Fig. 3 (A) sind, unter der Annahme, dass nur ein einzelnes Objekt geortet wird, die Zwischenfrequenzsignale s für die ersten drei Rampen j = 1 bis j = 3 als Funktionen der Zeit t (Zeitsignale) dargestellt. In der Auswerte- und Steuereinrichtung 22 wird das als analoges Signal vom Mischer 18 gelieferte Zeitsignal periodisch, zu Abtastzeitpunkten $t_1$, $t_2$, ..., abgetastet, digitalisiert und gespeichert. Die Abtastzeitpunkte sind mit den Modulationsrampen des Sendesignals synchronisiert und innerhalb jeder Rampe mit dem Index k numeriert. Die Abtastperiode, also der zeitliche Abstand zwischen den einzelnen Abtastzeitpunkten, ist mit T bezeichnet.

Durch schnelle Fouriertransformation (FFT) lässt sich das Zeitsignal für jede Rampe in ein Spektrum umwandeln, das die (komplexe) Amplitude des Zwischenfrequenzsignals als Funktion der Frequenz f angibt. In Fig. 3 (B) und (C) sind für jede der drei Rampen zwei kleine Diagramme dargestellt, die den Absolutbetrag A und die Phase φ als Funktion der Frequenz f angeben.

Unter der Annahme, dass nur ein einzelnes Objekt vorhanden ist, weist das auf einer einzelnen Rampe aufgenommene Spektrum einen scharfen Peak 26 bei der Frequenz $f_R + f_D$ auf. Wegen des geringen zeitlichen Abstands $T_c$ der Rampen bleiben die Frequenzen $f_R + f_D$ praktisch unverändert, so dass der Peak 26 in allen drei in Fig. 3 (B) gezeigten Spektren an derselben Stelle liegt.

Wenn jedoch die Relativgeschwindigkeit des Objektes nicht gleich 0 ist, so führt die geringfügige Abstandsänderung des Objektes, die innerhalb der Rampendauer $T_c$ eintritt, zu einer Phasenverschiebung des Zwischenfrequenzsignals, wie in Fig. 3 dargestellt ist. Von Rampe zu Rampe nimmt die Phase jeweils um einen bestimmten Betrag x zu. Wenn mit $φ_0$ die Phase auf der ersten Rampe (j = 1) bezeichnet ist, so hat die Phase auf der zweiten Rampe (j = 2) den Wert $φ_0 + x$ und auf der dritten Rampe (j = 3) den Wert $φ_0 + 2x$.

Allgemein lässt sich das Zwischenfrequenzsignal s als Funktion des Abtastindex k und des Rampenindex j wie folgt beschreiben:

$$s(k,j) = \mathrm{Re}(\exp(\,i(φ_0 \;+\; 2\pi\,(f_R + f_D)\,k\,T \;+\; 2\pi\,f_D\,j\,T_C))) \tag{3}$$

Der Term $(f_R + f_D)\,k\,T$ repräsentiert den Laufzeit- und Dopplereffekte innerhalb einer einzelnen Rampe. Der Term $f_D\,j\,T_C$ repräsentiert den Effekt der leichten Änderung des Objektabstands von Rampe zu Rampe und ist nur von dem geschwindigkeitsabhängigen Anteil $f_D$ (der Dopplerfrequenz) abhängig. Der Wert $φ_0$ ist ein Phasen-Offset, der gegeben ist durch

$$φ_0 = 4\pi\,R\,f_0\,/\,c \tag{4}$$

wobei $f_0$ die Mittenfrequenz der Frequenzrampen ist.

Wenn man, wie in Fig. 3, eine Fouriertransformation jeweils nur innerhalb einer einzelnen Rampe ausführt (über den Index k bei festem j), so liefert der Term $f_D\,j\,T_C$ in Gleichung (3) jeweils nur einen Beitrag x, 2x, ... zur Phase.

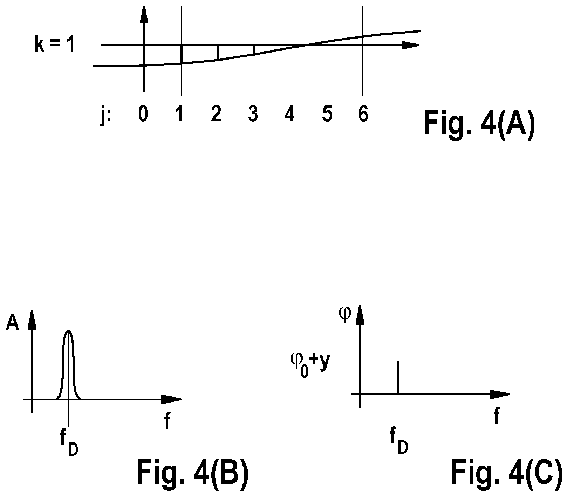

Man kann jedoch auch eine Fouriertransformation über einen "Längsschnitt" der Zeitsignale ausführen, indem man den Abtastindex k festhält und die schnelle Fouriertransformation über den laufenden Rampenindex j ausführt. In Fig. 3 und 4 ist dies symbolisch für den Abtastindex k = 1 dargestellt. In Fig. 3 sind die Funktionswerte zum Abtastzeitpunkt

$t_1$ als dicke Balken dargestellt. Die gleichen Balken sind auch in Fig. 4 (A) gezeigt. Sie sind hier jedoch gegen den Rampenindex j aufgetragen. Aufgrund des Phasenversatzes von Rampe zu Rampe erhält man wiederum eine periodische Funktion, die man einer Fouriertransformation unterziehen kann. Das Ergebnis ist in Fig. 4 (B) und (C) wiederum als Diagramm für den Betrag A und die Phase φ der komplexen Amplitude dargestellt. Diese Fouriertransformationen, die man für jedes k ausführen kann, liefern bei einem einzelnen Objekt einen scharfen Peak bei der Dopplerfrequenz $f_D$. Die Phase setzt sich zusammen aus dem Phasen-Offset $φ_0$ und einem Anteil y (= $f_R$ + $f_D$) k T.

Für die Berechnung des Abstands R und der Relativgeschwindigkeit v des Objekts werden nur die Frequenzanteile $f_R$ und $f_D$ benötigt. Wie Fig. 4 zeigt, liefern die Spektren, die durch Fouriertransformation über den Rampenindex j gewonnen werden, den Frequenzanteil $f_D$, während die Fouriertransformation innerhalb jeder einzelnen Rampe gemäß Fig. 3 die Summe $f_R$ + $f_D$ der Frequenzanteile liefert. Aus beiden Größen zusammen lässt sich dann der Frequenzanteil $f_R$ und damit der Abstand R berechnen.

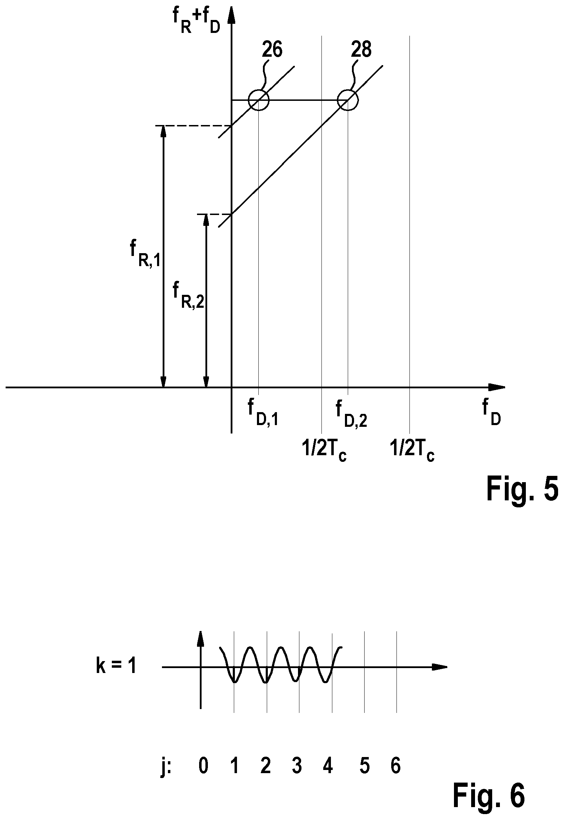

Ein besonders elegantes Auswertungsverfahren besteht darin, dass die oben beschriebenen Fouriertransformationen zu einer sogenannten zweidimensionalen Fouriertransformation zusammengefasst werden. Dabei werden die auf mehreren aufeinanderfolgenden Rampen gewonnenen Zeitsignale in einen zweidimensionalen Frequenzraum transformiert dessen Koordinaten die Dopplerfrequenz $f_D$ und die Summe $f_R$ + $f_D$ sind, wie in Fig. 5 gezeigt ist. In diesem zweidimensionalen Frequenzraum findet sich der Peak 26 dann bei einer Position $f_{D,1}$ auf der waagerechten Achse, die der Dopplerfrequenz und damit der Relativgeschwindigkeit v des Objekts entspricht, und seine Position auf der vertikalen Achse ist $f_{R,1}$ + $f_{D,1}$. In diesem Diagramm liegen die Peaks von Objekten, die den gleichen Abstand ($f_R$ konstant) aber unterschiedliche Relativgeschwindigkeiten ($f_D$ variabel) haben, auf 45°-Geraden. Wo die 45°-Gerade, die durch den Peak 26 geht, die vertikale Achse schneidet, lässt sich der abstandsabhängigen Frequenzanteil $f_{R,1}$ unmittelbar ablesen und in einen zugehörigen Abstand $R_1$ umrechnen.

Allerdings setzt das bisher beschriebene Verfahren voraus, dass für die Dopplerfrequenz $f_D$ die Eindeutigkeitsbedingung

$$| f_D | < 1 / 2T_C \qquad\qquad (5)$$

nach dem Abtasttheorem von Shannon erfüllt ist. Bei größeren Relativgeschwindigkeiten und entsprechend größeren Dopplerfrequenzen $f_D$ ist nämlich die periodische Funktion, die in Fig. 4 (A) durch die diskreten Funktionswerte bei j = 1, j = 2 etc. gegeben ist, nicht mehr eindeutig bestimmbar. Als Beispiel zeigt Fig. 6 eine periodische Funktion, die bei j = 1, j = 2 und j = 3 die gleichen Funktionswerte hat wie in Fig. 4 (A), jedoch eine wesentlich größere Frequenz aufweist und deshalb ein Objekt mit einer wesentlich größeren Relativgeschwindigkeit repräsentieren würde. Solange die wahre Relativgeschwindigkeit des Objekts nicht bekannt ist, muss deshalb mit der Möglichkeit gerechnet werden, dass das Objekt nicht durch den Peak 26 in Fig. 5 repräsentiert wird, sondern durch einen Peak 28 bei einer größeren Dopplerfrequenz $f_{D,2}$, die außerhalb des Eindeutigkeitskorridors liegt. Zu diesem Peak würde dann auch ein anderer Objektabstand $R_2$ gehören, der durch die Frequenz $f_{R,2}$ in Fig. 5 bestimmt wird.

Ebenso könnte es sich bei dem Längsschnitt des Zwischenfrequenzsignals auch um jede höhere Oberschwingung der in Fig. 6 gezeigten Funktion handeln, die jeweils eine weitere mögliche, noch höhere Relativgeschwindigkeit des Objekts angibt.

Wenn die Relativgeschwindigkeit des Objekts negativ ist, sind die Zwischenfrequenzsignale in Fig. 3 zur anderen Seite verschoben, was bei der Fouriertransformation durch eine negative Dopplerfrequenz $f_D$ repräsentiert würde. In diesem Fall könnte das Objekt auch durch Peaks repräsentiert werden, die an entsprechenden Positionen links von der ($f_R$ + $f_D$)-Achse in Fig. 5 liegen. In jedem Fall liefert die Messung, sofern der Bereich in Frage kommender Relativgeschwindigkeiten nicht ausreichend eingeschränkt werden kann, eine Schar von möglichen Peakpositionen und entsprechenden Wertepaaren $f_D$, $f_R$, deren Werte sich präzise berechnen lassen, von denen jedoch unbekannt ist, welches Wertepaar das wahre Objekt repräsentiert.

Benötigt wird deshalb ein Verfahren, das die Auswahl des richtigen Wertepaares ermöglicht.

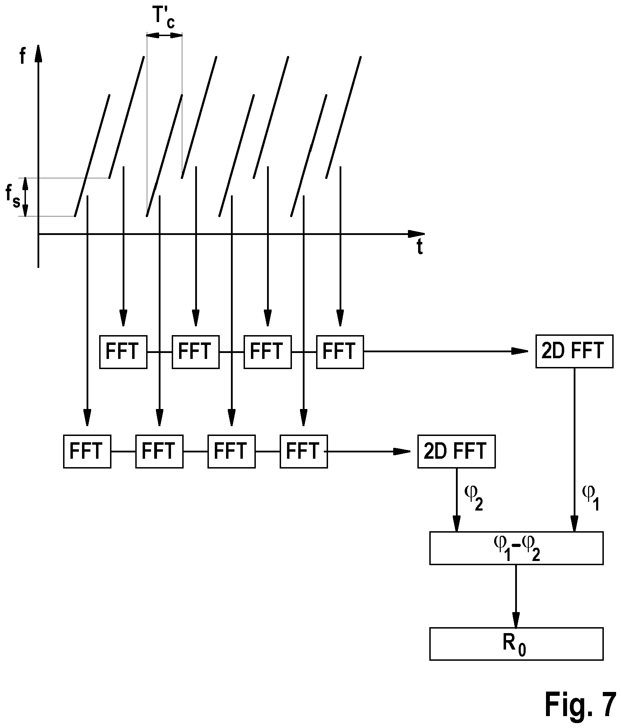

Zu diesem Zweck wird anstelle des in Fig. 2 gezeigten Modulationsschemas ein Modulationsschema verwendet, das in Fig. 7 gezeigt ist. Bei diesem Modulationsschema sind zwei Folgen von Rampen 24, 30 so miteinander verschachtelt, dass auf eine Rampe 24 mit einem zeitlichen Abstand $T'_C$ eine frequenzversetzte Rampe 30 folgt, auf die dann die nächste Rampe 24 ohne Frequenzversatz folgt, usw.. Die Rampen 24 und 30 haben die gleiche Dauer und den gleichen Frequenzhub, sind jedoch um einen festen Frequenzabstand $f_s$ gegeneinander verschoben. Wahlweise können die einzelnen Rampen oder auch die Rampenpaare 24, 30 jeweils durch eine Pause getrennt sein. Im gezeigten Beispiel folgen die Rampen ohne Pause aufeinander, so dass der zeitliche Abstand $T_C'$ wieder gleich der Rampendauer $T_C$ ist.

Die anhand von Fig. 1 bis 6 beschriebene Auswertungsprozedur kann nun einmal für die Schar der Rampen 24 ausgeführt werden und noch einmal für die Schar der Rampen 30. Die dabei erhaltenen Zwischenfrequenzsignale s unterscheiden sich vor allem in ihrem Phasen-Offset. Für die erste Rampe 24 ist der Phasen-Offset gemäß Gleichung (4) gegeben durch:

$$\varphi_1 = 4\pi\, R_0\, f_1\, /\, c \qquad\qquad (6)$$

Dabei ist $R_0$ der Abstand des Objekts zu dem Zeitpunkt, an dem das Signal der ersten Rampe empfangen wird, und $f_1$ ist die Mittenfrequenz der Rampe 24.

Für die erste versetzte Rampe 30 erhält man entsprechend den Phasen-Offset:

$$\varphi_2 = 4\pi\, (R_0 + T'_C\, v)\, f_2\, /\, c \qquad\qquad (7)$$

Darin ist $f_2$ die Mittenfrequenz der Rampe 30. Der Term $T'_C\, v$ repräsentiert die Zunahme des Objektabstands in dem Zeitintervall $T'_C$ vom Beginn der ersten Rampe 24 bis zum Beginn der ersten Rampe 30. Für die Phasendifferenz erhält man dann:

$$\varphi_2 - \varphi_1 = 4\pi\, (\, R_0\, f_s\, +\, T'_C\, v\, f_s\, +\, T'_C\, v\, f_1\, )\, /\, c \qquad\qquad (8)$$

Da $T'_C$ sehr klein ist, dominiert der Term, der $R_0$ enthält, und die Terme, die $T'_C\, v$ enthalten, können vernachlässigt werden:

$$\varphi_2 - \varphi_1 \approx 4\pi\, R_0\, f_s\, /\, c \qquad\qquad (9)$$

Diese Beziehung liefert einen Näherungswert $R_0$ für den Objektabstand, der nicht von der Relativgeschwindigkeit v abhängig ist.

Wie in Fig. 7 symbolisch dargestellt ist, werden die Zeitsignale, die man für die Schar der Rampen 24 enthält, einer zweidimensionalen schnellen Fouriertransformation (2D FFT) unterzogen, äquivalent zu Fouriertransformationen über die einzelnen Rampen und entsprechende Fouriertransformationen über Längsschnitte durch die Zeitsignale aus verschiedenen Rampen. Auf diese Weise erhält man den Peak 26 in Fig. 5 und auch die Phase $\varphi_1$ des Zwischenfrequenzsignals (aus der komplexen Amplitude am Ort des Peaks 26). Entsprechend verfährt man mit der Schar der Rampen 30 und erhält auf diese Weise die Phase $\varphi_2$.

Aus der Phasendifferenz $\varphi_1 - \varphi_2$ lässt dann nach der oben angegebenen Gleichung (9) der Näherungswert $R_0$ berechnen.

Dieser Näherungswert $R_0$ wird dann mit den möglichen Abstandswerten $R_1$, $R_2$ verglichen, die zu den in Fig. 5 dargestellten Frequenzwerten $f_{R,1}$, $f_{R,2}$ etc. gehören. Derjenige dieser möglichen Abstände $R_1$, $R_2$ ... der dem Näherungswert $R_0$ am nächsten kommt, wird dann als Wert für den wahren Abstand des Objekts betrachtet. Aus der Position des zugehörigen Peaks 26 oder 28 in Fig. 5 lässt sich dann die Dopplerfrequenz $f_D$ und daraus die wahre Relativgeschwindigkeit v des Objekts ermitteln.

Auf diese Weise wird die Mehrdeutigkeit beseitigt, die bei der Auswertung nur einer der Scharen der Rampen 24, 30 bestünde.

Wenn mehrere Objekte gleichzeitig geortet werden, erhält man für jedes Objekt genau einen Peak 26 innerhalb des Eindeutigkeitsintervalls von $-1/2T_C$ bis $+1/2T_C$, so dass auch Mehrdeutigkeiten aufgrund der Zuordnung der Peaks zu den Objekten vermieden werden.

Das beschriebene Verfahren zur Bestimmung des Näherungswertes $R_0$ führt allerdings seinerseits zu Mehrdeutigkeiten, wenn der Objektabstand so groß wird, dass die Phasendifferenz $\varphi_2 - \varphi_1$ größer wird als $2\pi$. Daraus ergibt sich eine Schranke für die maximal messbare Entfernung:

$$R_{MAX} = C\, /\, 2\, f_s \qquad\qquad (10)$$

Der Frequenzversatz $f_s$ sollte deshalb so (klein) gewählt werden, dass der gewünschte Entfernungsbereich abgedeckt wird.

In der Praxis werden die in Frage kommenden Relativgeschwindigkeiten der Objekte innerhalb eines beschränkten Intervalls liegen. Das schränkt gemäß Fig. 5 auch das Intervall ein, in dem die in Frage kommenden Objektabstände liegen müssen. Folglich kann $f_s$ so groß gewählt werden, dass der Näherungswert für den Abstand nur innerhalb des tatsächlich benötigten Abstandsbereiches eindeutig ist.

Wahlweise besteht auch die Möglichkeit, den Frequenzversatz $f_s$ im Verlauf der aufeinanderfolgenden Messzyklen zu variieren, um den Eindeutigkeitsbereich zeitweise - ggf. bedarfsabhängig - zu variieren und/oder durch Auswertung der Phasendifferenzen für unterschiedliche Frequenzversätze zusätzliche Information zu gewinnen.

**Patentansprüche**

1. Verfahren zur Bestimmung von Abständen (R) und Relativgeschwindigkeiten (v) mehrerer gleichzeitig georteter Objekte (12, 14) mit einem FMCW-Radar, bei dem die Frequenz eines Sendesignals in der Form von sich periodisch wiederholenden Rampen (24, 30) moduliert wird, das Sendesignal mit einem empfangenen Signal zu einem Zwischenfrequenzsignal (s) gemischt wird und zur Bestimmung des Abstands (R) und/oder der Relativgeschwindigkeit (V) der Objekte die Änderung der Phase ($\varphi$) des Zwischenfrequenzsignals (s) von Rampe zu Rampe ausgewertet wird wobei das Modulationsmuster mindestens zwei Rampen (24, 30) umfasst, die sich nur um einen festen Frequenzversatz ($f_s$) unterscheiden und in einem bestimmten zeitlichen Abstand ($T'_C$) aufeinanderfolgen, und anhand der Phasendifferenz ($\varphi_1 - \varphi_2$) der Zwischenfrequenzsignale für diese beiden Rampen ein eindeutiger Näherungswert ($R_0$) für den Objektabstand berechnet wird, **dadurch gekennzeichnet, dass** das Modulationsmuster zwei Scharen von untereinander identischen Rampen (24, 30) umfasst, die so ineinander verschachtelt sind, dass jeweils eine Rampe (24) ohne Frequenzversatz und eine Rampe (30) mit Frequenzversatz einander abwechseln, die Zwischenfrequenzsignale für die beiden Scharen getrennt ausgewertet werden, um die Phasendifferenz ($\varphi_1 - \varphi_2$) zu bestimmen, und durch Auswertung der Zwischenfrequenzsignale (s) mehrerer aufeinanderfolgender identischer Rampen (24) eine Mehrzahl von in Frage kommenden Objektabständen berechnet wird und als endgültiger Objektabstand derjenige dieser berechneten Abstände ausgewählt wird, der dem Näherungswert ($R_0$) am nächsten kommt.

2. Verfahren nach Anspruch 1 , bei dem die in aufeinanderfolgenden identischen Rampen erhaltenen Zwischenfrequenzsignale (s) einer zweidimensionalen Fouriertransformation zur Bestimmung der auftretenden Frequenzen und der zugehörigen Phasen unterzogen werden.

3. FMCW-Radarsensor mit einer Steuer- und Auswertungseinrichtung (22), in der das Verfahren nach Anspruch 1 oder 2 implementiert ist.

**Claims**

1. Method for determining distances (R) and relative speeds (v) of multiple simultaneously located objects (12, 14) using an FMCW radar, in which the frequency of a transmitted signal is modulated in the form of periodically repeating ramps (24, 30), the transmitted signal is mixed with a received signal to produce an intermediate frequency signal (s), and the distance (R) and/or the relative speed (V) of the objects is/are determined by evaluating the change in the phase ($\varphi$) of the intermediate frequency signal (s) from ramp to ramp, wherein the modulation pattern comprises at least two ramps (24, 30), which differ only by a fixed frequency offset ($f_s$) and are successive at a particular interval of time ($T'_c$), and the phase difference ($\varphi_1 - \varphi_2$) of the intermediate frequency signals for these two ramps is used to calculate a unique approximate value ($R_0$) for the object distance, **characterized in that** the modulation pattern comprises two families of mutually identical ramps (24, 30) that are nested in one another such that in each case one ramp (24) without a frequency offset and one ramp (30) with a frequency offset alternate with one another, the intermediate frequency signals for the two families are evaluated separately in order to determine the phase difference ($\varphi_1 - \varphi_2$), and evaluation of the intermediate frequency signals (s) of multiple successive identical ramps (24) is used to calculate a plurality of possible object distances, and the final object distance selected is that one of these calculated distances that comes closest to the approximate value ($R_0$).

2. Method according to Claim 1, in which the intermediate frequency signals (s) obtained in successive identical ramps are subjected to a two-dimensional Fourier transformation to determine the frequencies occurring and the associated phases.

3. FMCW radar sensor having a control and evaluation device (22) in which the method according to Claim 1 or 2 is implemented.

**Revendications**

1. Procédé de détermination de distances (R) et de vitesses relatives (v) de plusieurs objets localisés simultanément (12, 14) avec un radar FMCW, dans lequel la fréquence d'un signal d'émission est modulée sous la forme de rampes périodiquement récurrentes (24, 30), le signal d'émission est mélangé à un signal reçu pour fournir un signal de fréquence intermédiaire (s) et pour déterminer la distance (R) et/ou la vitesse relative (V) des objets, la variation de phase ($\varphi$) du signal de fréquence intermédiaire (s) est analysée de rampe à rampe, le modèle de modulation comprenant au moins deux rampes (24, 30) qui se distinguent seulement par un décalage de fréquence fixe ($f_s$) et qui se succèdent dans un intervalle de temps déterminé (T'c), et à l'aide de la différence de phase ($\varphi_1 - \varphi_2$) des signaux de fréquences intermédiaires pour ces deux rampes, une valeur d'approximation univoque ($R_0$) pour la distance des objets est calculée, **caractérisé en ce que** le modèle de modulation comprend deux pluralités de rampes identiques les unes aux autres (24, 30) qui sont emboîtées les unes dans les autres de telle sorte qu'à chaque fois une rampe (24) sans décalage de fréquence et une rampe (30) avec un décalage de fréquence alternent l'une avec l'autre, les signaux de fréquences intermédiaires pour les deux pluralités sont analysés séparément afin de déterminer la différence de phase ($\varphi_1 - \varphi_2$) et par analyse des signaux de fréquences intermédiaires (s) de plusieurs rampes identiques successives (24), une pluralité de distances d'objets en question sonr calculées et en tant que distance d'objet définitive, on choisit celle des distances calculées qui se rapproche le plus de la valeur d'approximation ($R_0$).

2. Procédé selon la revendication 1, dans lequel les signaux de fréquences intermédiaires (s) obtenus dans des rampes identiques successives sont soumis à une transformation de Fourier bidimensionnelle pour déterminer les fréquences produites et les phases associées.

3. Capteur radar FMCW comprenant un dispositif de commande et d'analyse (22) dans lequel le procédé selon la revendication 1 ou 2 est mis en oeuvre.

10

18  20

16                    R                          12

                                                  v

                                        14

s

22

Fig. 1

f    j:  1  2  3  4  5  6  7  8  9

24                                          $f_h$

                                       $T_c$            t

Fig. 2

Fig. 3(A)

Fig. 3(B)

Fig. 3(C)

k = 1

j:  0  1  2  3  4  5  6

**Fig. 4(A)**

A

$f_D$

**Fig. 4(B)**

$\varphi$

$\varphi_0 + y$

$f_D$

**Fig. 4(C)**

**Fig. 5**

**Fig. 6**

Fig. 7

**IN DER BESCHREIBUNG AUFGEFÜHRTE DOKUMENTE**

**In der Beschreibung aufgeführte Patentdokumente**

- DE 102009000468 A1
- WO 03048802 A2
- EP 1918736 A2
- DE 102009047931 A1
- WO 0231529 A

**In der Beschreibung aufgeführte Nicht-Patentliteratur**

- **M O MONOD et al.** *Intertwined Linear Frequency Modulated Radar and Simulator for Outdoor Robotics Applications,* 06. Juli 2009